# FASCICULE DE BREVET EUROPEEN

(11) **EP 4 032 050 B1**
(45) Date de publication et mention de la délivrance du brevet: **04.09.2024**
(21) Numéro de dépôt: 20768071.1
(22) Date de dépôt: 14.09.2020
(51) Int. Cl.: G06Q 10/087, G06Q 10/0833, G06Q 10/08

(54) **PROCEDE DE DETECTION DE MANUTENTION DE PRODUIT SUR UN PRESENTOIR, PRESENTOIR ET MAGASIN AUTOMATISE**
VERFAHREN ZUM ERKENNEN DER HANDHABUNG VON PRODUKTEN AUF EINEM SCHAUGESTELL, SCHAUGESTELL UND AUTOMATISCHES GESCHÄFT
METHOD FOR DETECTING THE HANDLING OF PRODUCTS ON A DISPLAY STAND, DISPLAY STAND AND AUTOMATED SHOP

(30) Priorité: 16.09.2019 FR 1910193
(43) Date de publication de la demande: 27.07.2022
(73) Titulaire: Centiloc, 13590 Le Canet de Meyreuil (FR)
(72) Inventeur: PALMADE, Romain, 13390 AURIOL (FR); HENNINOT, Loïc, 13821 LA PENNE SUR HUVEAUNE (FR); BONNIN, Frédérick, 13790 ROUSSET (FR)
(74) Mandataire: Med'inVent Consulting
(86) Numéro de dépôt international: PCT/EP2020/075646
(87) Numéro de publication internationale: WO 2021/052909

(56) Documents cités:
- KR-B1- 101 860 944
- TW-A- 201 810 139
- US-A1- 2017 024 756
- US-A1- 2017 193 593
- US-A1- 2018 317 073
- US-B1- 10 037 509

## Description

### Domaine Technique

La présente invention se rapporte à un procédé de détection de manutention de produit sur un présentoir ainsi qu'au présentoir utilisé pour mettre en oeuvre ledit procédé. Plus particulièrement, l'invention se rapporte également au commerce de détail automatisé, et notamment à un magasin utilisant le présentoir et mettant en oeuvre le procédé de détection de manutention de produit.

### Arrière-Plan Technologique

La demande de brevet US2017/0193593 divulgue un système de magasin automatisé qui détermine la prise d'un produit par un utilisateur dès lors que l'utilisateur stationne à proximité d'un rayonnage comportant un produit. Dans ce système plusieurs incertitudes existent. Le stationnement d'un utilisateur devant un rayonnage n'est pas suffisant pour déterminer que l'utilisateur prend un produit. En outre, si l'utilisateur prend un produit, il est difficile de dire combien de produits ont été effectivement pris par l'utilisateur. De plus, le rayonnage doit être bien rangé afin d'être sûr que le produit correspond bien à un produit du rayonnage.

Afin de s'assurer du contenu d'un rayonnage, il peut être réalisé un inventaire du rayonnage. Le brevet US 10,037,509 divulgue un système d'inventaire automatisé utilisant la technologie RFID (de l'anglais Radio Frequency Identification) permettant d'identifier la totalité des produits placés sur un rayonnage.

Le brevet US 10,262,293 divulgue un système de repérage de produits sur un présentoir de magasin et de repérage d'un consommateur dans le magasin afin de déterminer si le consommateur prend ou remet un produit sur le présentoir. Un tel système a pour but de réaliser une facturation automatique des produits pris par le consommateur et d'éviter un passage en caisse qui peut être fastidieux. Une multitude de capteurs de différents types est utilisée afin de déterminer si un produit est pris ou remis sur le présentoir. A cet effet, des informations provenant de caméras, de détecteur de présence et de capteur de poids montés sur un présentoir permettent de déterminer quel produit est pris ou remis sur un présentoir. Un tel système est relativement coûteux et complexe à installer. En outre, un tel système n'est pas totalement fiable et peut être trompé par un utilisateur mal intentionné. Un produit peut être remplacé par un autre moins coûteux ayant le même poids et dont la différence d'aspect n'est pas facilement identifiable par une caméra ou par un détecteur de présence.

Par ailleurs, la technologie NFC (de l'anglais Near Field Communication) permet d'envoyer un identifiant de produit, généralement unique, à un lecteur dès lors qu'un produit est muni d'une étiquette électronique d'identification. La technologie NFC utilise un champ magnétique qui permet de communiquer à quelques centimètres du lecteur et permet donc de localiser très précisément un produit sur un présentoir de magasin.

La demande de brevet français déposée le 29 août 2019, sous le numéro 19-09528 et intitulée « plateau de communication en champ proche et procédé de localisation sur ledit plateau », divulgue un plateau de communication utilisant la technologie NFC qui permet de localiser précisément un objet muni d'une étiquette électronique sur un plateau de communication. Ladite demande de brevet propose une solution utilisable pour le repérage de produits sur une étagère ou un présentoir de magasin. Le plateau précité propose une solution permettant que chaque retrait ou dépose de produit soit aisément détectable, avec une précision de localisation de l'ordre de quelques centimètres.

La demande de brevet français déposée le 10 septembre 2019, sous le numéro 19-09939 et intitulée « dispositif mâle, dispositif femelle et système de communication en champ proche » divulgue un crochet de présentoir intégrant une antenne NFC. Le crochet dévoilé permet d'identifier tous les produits placés sur ledit crochet, à l'aide d'étiquettes électroniques placées sur les produits et ayant une antenne située autour d'un trou de suspension de l'emballage du produit. Un tel crochet permet en outre de connaître la position d'un produit sur ledit crochet.

L'automatisation des magasins en libre-service a besoin de solutions simples et peu coûteuses à installer, tout en assurant une grande fiabilité de fonctionnement.

### Résumé de l'Invention

L'invention vise à résoudre le problème de double localisation de produits et de personnes dans un magasin de manière simple et à bas coût, tout en garantissant une fiabilité de la prise en main des produits. Selon l'invention, la détection de déplacement des produits est réalisée par la technologie NFC. La localisation d'une personne est réalisée à l'aide d'un objet communicant par triangulation de messages reçu dudit objet par radio fréquence.

Selon un premier mode de réalisation, l'invention propose un procédé de détection de manutention de produits sur un présentoir par une ou plusieurs personnes, lesdits produits étant munis d'étiquettes électroniques comportant chacune un identifiant unique, chaque personne étant associée à un objet communicant par radio fréquence et émettant périodiquement un signal de signalisation, ledit présentoir comprenant une pluralité d'antennes de communication en champ proche et au moins deux récepteurs radio fréquence étant placés à proximité du présentoir, une unité centrale de traitement étant reliée audit présentoir et auxdits récepteurs pour réaliser ledit procédé qui comporte une répétition des étapes suivantes :
- une étape d'inventaire des produits au cours de laquelle le présentoir envoie et reçoit des messages par l'intermédiaire des antennes de communication en champ proche afin d'identifier et de localiser les étiquettes électroniques de produits présents sur le présentoir,
- une étape de comparaison d'inventaires au cours de laquelle l'unité centrale de traitement détermine entre deux étapes d'inventaire successives une différence parmi les produits présents sur le présentoir, ladite étape identifiant un produit enlevé ou ajouté sur ledit présentoir et déterminant une position sur ledit présentoir où ledit produit a été enlevé ou ajouté,
- une étape de localisation de personne au cours de laquelle chacun des récepteurs radio fréquence reçoit un signal de signalisation, émis par un objet communicant par radio fréquence, mesure la puissance du signal reçu et détermine la position de l'objet communicant associé à une personne par triangulation en fonction de la position des récepteurs radio fréquence et de la mesure de puissance du signal reçu,
- une étape d'association au cours de laquelle l'unité centrale de traitement associe une personne à un produit lorsque la position de l'objet communicant associé à ladite personne est localisée à proximité de la position de l'étiquette électronique identifiée d'un produit ayant été enlevé ou ajouté sur le présentoir, ladite personne associée étant considérée ayant enlevé ou remis le produit sur le présentoir

Selon un exemple de mise en oeuvre, l'étape d'association peut associer la personne au produit identifié lorsque l'objet communicant est localisé à une distance de l'étiquette électronique inférieure à un premier seuil de distance.

Selon un autre exemple de mise en oeuvre, lorsqu'un ou plusieurs objets communicants sont localisés à une distance de l'étiquette électronique supérieure au premier seuil de distance et inférieure à un deuxième seuil de distance, l'étape d'association associe au produit la personne associée à l'objet communicant le plus proche de l'étiquette électronique dudit produit.

Préférentiellement, les récepteurs radio fréquence peuvent être des récepteurs conformes à la norme IEEE802.15.1. Le signal de signalisation peut être un message de signalisation indiquant un identifiant unique de l'objet communicant ayant envoyé ledit message. La triangulation peut être réalisée sur les messages reçus par les au moins deux récepteurs en fonction d'une mesure de puissance du signal reçu par chacun desdits récepteur pour les messages comportant le même identifiant unique, et de la position desdits récepteurs

Selon un deuxième mode de réalisation, l'invention propose un présentoir de produits comprenant un ou plusieurs éléments de présentation destinés à recevoir des produits munis d'étiquettes électroniques. Les éléments de présentation comprennent chacun une ou plusieurs antennes de communication en champ proche, lesdites antennes de communication en champ proche étant reliées à au moins un circuit lecteur de communication en champ proche afin de pouvoir communiquer avec lesdites étiquettes électroniques et de déterminer une position de chaque produit sur ledit présentoir. Le présentoir comporte au moins deux récepteurs radio fréquence espacés entre eux et destinés à recevoir un signal de signalisation provenant d'un objet communicant associé à une personne

Selon un exemple d'implémentation, l'un des éléments de présentation peut être un plateau comportant une pluralité d'antennes de communication en champ proche et au moins un circuit lecteur de communication en champ proche.

Selon un autre exemple d'implémentation, l'un des éléments de présentation peut être un crochet de présentoir comportant au moins une antenne de communication en champ proche disposée à l'intérieur dudit crochet et au moins un circuit lecteur placé dans une base de fixation dudit crochet.

Selon un troisième mode de réalisation, l'invention propose un magasin comportant au moins un présentoir tel que précité, au moins un premier émetteur-récepteur radio fréquence placé dans une zone d'entrée dudit magasin, au moins un deuxième émetteur-récepteur radio fréquence placé dans une zone de sortie dudit magasin, et un système centralisé de traitement configuré pour :
- détecter un objet communicant dans la zone d'entrée à l'aide du au moins un premier émetteur-récepteur,
- associer l'objet communicant à une personne et à un panier de ladite personne,
- détecter une manipulation d'un produit sur un présentoir selon le procédé précité et enregistrer le produit enlevé ou remis comme étant respectivement ajouté au panier ou enlevé du panier, suivant que le produit manipulé ait été respectivement enlevé du présentoir ou remis sur le présentoir,
- facturer, par débit d'un compte bancaire associé à la personne, les produits enregistrés dans le panier lorsque la personne est détectée dans la zone de sortie par le deuxième émetteur-récepteur

### Brève Description des figures

L'invention sera mieux comprise et d'autres caractéristiques et avantages de celle-ci apparaîtront à la lecture de la description suivante de modes de réalisation particuliers de l'invention, donnés à titre d'exemples illustratifs et non limitatifs, et faisant référence aux dessins annexés, parmi lesquels :
[Fig.1] représente un magasin de détail utilisant l'invention,
[Fig.2] montre un schéma fonctionnel mis en oeuvre dans le magasin de la figure 1,
[Fig.3] illustre un exemple de procédé de détection de personnes dans le magasin de la figure 1,
[Fig.4] illustre une localisation de personne devant un présentoir,
[Fig.5] détaille un procédé de détection de personne,
[Fig.6] montre un organigramme d'un exemple de réalisation d'un procédé de manutention selon l'invention,
[Fig.7] illustre un présentoir selon l'invention,
[Fig.8] détaille un procédé d'inventaire de produits sur le présentoir de la figure 7.

### Description détaillée

Par communication en champ proche, le présent document fait référence à la technologie NFC limitée à quelques centimètres, et utilisant des antennes réalisées à l'aide de boucles conductrices formant des demi-transformateurs, aussi bien du côté d'un lecteur que du côté d'une étiquette électronique. Le lecteur est composé d'une antenne de communication en champ proche et d'un circuit lecteur connecté à l'antenne. Le circuit lecteur fournit un signal électrique modulé à l'antenne qui le transforme en champ magnétique modulé. La communication se fait par l'intermédiaire d'un champ magnétique couplant l'antenne d'émission du lecteur et l'antenne de récupération d'énergie d'une étiquette électronique. L'étiquette électronique peut moduler le champ en retour par rétro-modulation. Le circuit lecteur démodule cette rétro modulation. Pour plus de détails, l'homme du métier peut se reporter à la norme ISO14443 qui définit le fonctionnement des communications en champ proche.

Par étiquette électronique, le présent document fait référence à un dispositif d'identification comportant une puce électronique couplée à une antenne formant une bobine et s'autoalimentant par le champ magnétique créé par le lecteur. Un tel dispositif d'identification a généralement la forme d'une étiquette qui peut être facilement fixée sur de nombreux types d'emballages ou de produits.

Pour que la communication s'établisse entre le lecteur et l'étiquette électronique, il faut que l'étiquette électronique reçoive un champ magnétique d'une puissance suffisante pour alimenter la puce de l'étiquette électronique. La distance permettant la communication entre le lecteur et l'étiquette électronique dépend du dimensionnement des antennes du lecteur et de l'antenne de l'étiquette électronique, mais aussi de la puissance d'émission du lecteur. En utilisant une faible puissance d'émission du côté du lecteur, une étiquette électronique peut n'être détectée que si celle-ci est très proche de l'antenne d'émission. Selon la présente invention, les puissances d'émission sont limitées de sorte qu'il ne soit pas possible de détecter une étiquette électronique au-delà de quelques centimètres.

Par communication radio fréquence, la présente invention fait référence à des communication sans fil qui ne sont pas en champ proche. Les communications radio fréquence utilisées selon l'invention sont par exemple des communications utilisant les bandes de fréquences de 2,4 GHz ou 5 GHz. Préférentiellement, l'invention se réfère au standard de communication IEEE802.15.1, plus connu sous l'appellation « Bluetooth ». Néanmoins d'autres standards de communication peuvent être utilisés comme par exemple le standard IEEE802.11, plus connu sous le nom de WiFi ou encore un standard de communication en bande ultra large de type UWB (de l'anglais Ultra Wide Band) tel que par exemple normalisé par l' « European Telecommunication Standard Institute » (ETSI) sous la référence EN 302 065.

Selon l'invention, les termes « radio fréquence » excluent toute communication réalisée en champ proche bien que, dans l'absolu, les communications en champ proche constituent une forme de communication radio utilisant une fréquence porteuse.

Afin de simplifier les dessins ainsi que les explications qui en découlent, une même référence est utilisée pour définir un même objet ou un objet similaire. Par objet similaire, il faut comprendre un objet différent assurant une même fonction.

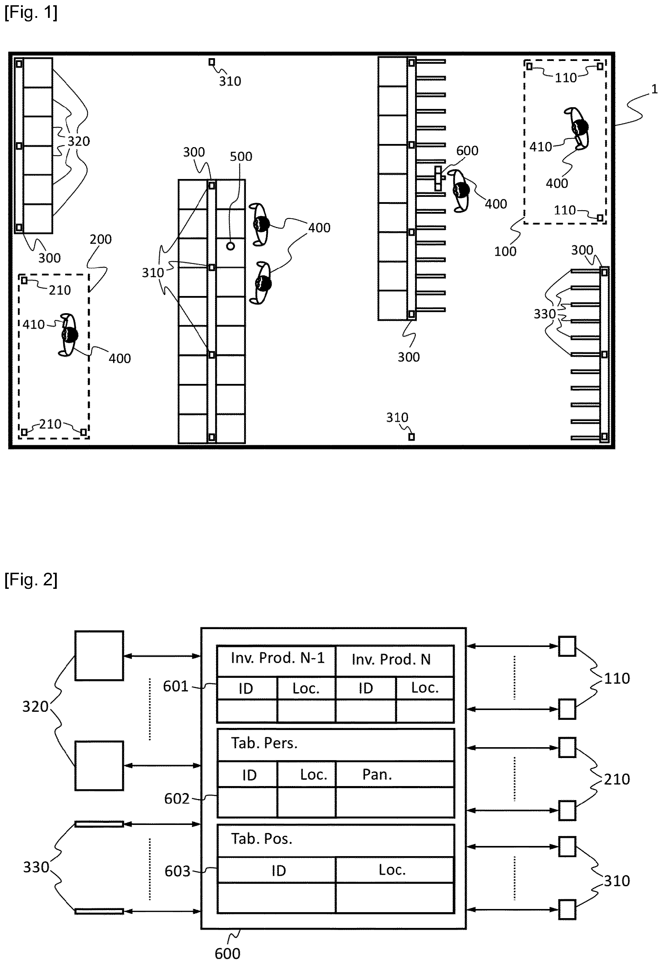

La figure 1 représente un magasin 1 de détail mettant en oeuvre l'invention pour effectuer des achats de manière fluide et sans passage en caisse. Selon cette figure 1, le magasin comporte une zone d'entrée 100, une zone de sortie 200 et des présentoirs 300 définissant une allée permettant à des personnes 400 de circuler afin d'accéder à des produits 500 ou 600 disposés sur les présentoirs 300. La disposition du magasin est donnée à titre d'exemple non limitatif, les zones d'entrée 100 et de sortie 200 ainsi que les présentoirs 300 peuvent être disposés de toute autre manière sans avoir d'effet sur l'invention.

La zone d'entrée 100 comporte des émetteurs-récepteurs 110 radio fréquence, par exemple de type Bluetooth, pour détecter et communiquer avec un objet portable 410, par exemple un téléphone portable, détenu par une personne 400. Le nombre d'émetteurs-récepteurs 110 dépend de la taille de la zone d'entrée 100 et de la portée des émetteurs-récepteurs 110, l'important étant que la zone d'entrée 100 dispose d'au moins un émetteur-récepteur 110. Selon un mode de réalisation, la zone d'entrée 100 est libre de sorte qu'une communication entre les émetteurs-récepteurs 110 et l'objet portable 410 s'établisse lorsque la personne 400 traverse ladite zone d'entrée 100. Selon une variante, la zone d'entrée 100 peut comporter un moyen de retenue de personne tel que par exemple, une barrière ou un sas n'autorisant l'accès au reste du magasin 1 à une personne 400 qu'après qu'une communication entre l'objet portable 410 et les émetteurs récepteurs 110 ait été effectuée.

La zone de sortie 200 comporte des émetteurs-récepteurs 210 radio fréquence, par exemple de type Bluetooth, pour détecter et communiquer avec l'objet portable 410 d'une personne 400. Pour les mêmes raisons que celles décrites pour la zone d'entrée 100, le nombre d'émetteurs-récepteurs 210 peut varier, l'important étant que la zone de sortie 200 dispose d'au moins un émetteur-récepteur 210. Selon un mode de réalisation, la zone de sortie 200 est libre, de sorte qu'une communication entre les émetteurs-récepteurs 210 et l'objet portable 410 s'établisse lorsque la personne 400 traverse ladite zone de sortie 200. Selon une variante, la zone de sortie 100 peut comporter un moyen de retenue de personne identique ou similaire au moyen de retenue de la zone d'entrée 100.

Les présentoirs 300 peuvent être des linéaires de supermarché, ou de tout autre type, destinés à l'exposition des produits 500 à des clients constitués par les personnes 400 circulant dans le magasin 1. A cet effet, chaque présentoir 300 comporte des éléments de présentation de type plateau 320 ou de type crochet 330 destinés à recevoir les produits 500. Les présentoirs 300 sont également munis de récepteurs 310 radio fréquence. Le nombre de récepteurs 310 peut varier en fonction de la taille du présentoir 300, l'important étant qu'un présentoir dispose d'au moins deux récepteurs 310 espacés entre eux. Par ailleurs le magasin 1 peut disposer d'autres récepteurs 310 disposés à différents endroits du magasin. Les récepteurs 1 sont des récepteurs par exemple de type Bluetooth, destinés à recevoir des messages provenant d'un objet portable 410.

Chacun des plateaux 320 comporte plusieurs antennes de communication en champ proche reliées à au moins un circuit lecteur afin de pouvoir communiquer avec des étiquettes électroniques. A cet effet, chaque produit 500 destiné à être placé sur un plateau 320, dispose d'une étiquette électronique apposée de préférence sur la partie en contact avec ledit plateau 320. L'étiquette électronique comporte un identifiant unique permettant d'identifier de manière précise un produit 500. L'utilisation d'un circuit lecteur de faible puissance et d'une pluralité d'antennes dans un plateau 320 permet en outre de localiser un produit. Afin d'avoir une précision de localisation inférieure à la taille des antennes, il est possible d'utiliser un plateau 320 et une méthode de localisation conforme à la demande de brevet français numéro 19-09528 déposée le 29 août 2019.

Chacun des crochets 330 comporte au moins une antenne de communication en champ proche reliée à au moins un circuit lecteur afin de pouvoir communiquer avec des étiquettes électroniques. Préférentiellement, le circuit lecteur est placé dans une base de fixation du crochet 330 et l'antenne de communication en champ proche s'étend sur toute la longueur du crochet 330 servant à suspendre des produits 600. A cet effet, chaque produit 600 dispose d'une étiquette électronique placée à proximité du crochet 330. Préférentiellement, l'étiquette électronique d'un produit 600 dispose d'une antenne située autour d'un trou ou d'une fente de suspension destinée à coopérer avec le crochet 330. L'homme du métier peut se reporter à la demande de brevet français numéro 19-09939 déposée le 10 septembre 2019, pour obtenir plus de détails sur la réalisation du crochet 330 ou des étiquettes électroniques des produits 600.

La figure 2 montre le schéma fonctionnel du système mis en oeuvre dans le magasin 1. Un système centralisé de traitement 600, par exemple un ordinateur ou un ensemble d'ordinateurs, est relié aux émetteurs-récepteurs 110 et 210, aux récepteurs 310, aux plateaux 320 et aux crochets 330 par l'intermédiaire d'une connexion filaire, par exemple de type USB ou Ethernet, ou par l'intermédiaire d'une connexion radio fréquence, par exemple de type WiFi ou Zigbee. Le système centralisé de traitement 600 comporte de la mémoire volatile et non volatile ainsi que des processeurs mettant en oeuvre des programmes pour réaliser en parallèle plusieurs procédés de traitements qui seront décrits par la suite. La mémoire comporte en outre des tables d'informations qui sont utilisées dans le cadre de l'invention.

Une première table 601 comprend des inventaires de produits 500 et 600 placés sur les présentoirs 300 du magasin 1. Ladite première table 601 comporte au moins un inventaire N venant d'être réalisé et inventaire N-1 correspondant à un inventaire réalisé juste avant l'inventaire N. Chacun des inventaires comprend une liste de tous les produits détectés, qui comporte l'identifiant unique ID du produit 500 ou 600 et la localisation du produit dans le magasin 1. La localisation est indiquée par exemple par des coordonnées cartésiennes exprimées en mètres à partir d'un point de référence du magasin. Selon une variante, la première table 601 comporte tous les inventaires réalisés dans le magasin au cours de la journée, chaque inventaire étant horodaté.

Une deuxième table 602 correspond à la table des personnes 400 présentes dans le magasin 1. Pour chaque personne 400, la table mémorise l'identifiant ID de l'objet communicant 410 associé à la personne, la localisation de l'objet communicant 410 et un panier correspondant à une zone de mémoire mémorisant des identifiants de produits 500 et/ou 600 pris par ladite personne. La localisation de l'objet communicant 410 correspond à la dernière position relevée de l'objet communicant 410 et repérée dans le même référentiel que la localisation des produits 500 et 600. Dans une variante, la deuxième table 602 comporte un historique de toutes les positions de l'objet communicant 410 depuis l'entrée dans le magasin 1, lesdites positions étant horodatées dans ledit historique.

Une troisième table 603 mémorise les positions des émetteurs-récepteurs 110 et 210, des récepteurs 310, des plateaux 320 et des crochets 330 dans le référentiel du magasin 1. Les positions des plateaux 320 et crochets 330 correspondent à un point de référence et à une direction de référence pour chaque plateau 320 et pour chaque crochet 330, à partir desquels le plateau 320 ou le crochet 330 indique une localisation relative d'un produit dans le référentiel dudit plateau 320 ou dudit crochet 330. Suivant une variante, la troisième table 603 peut comprendre les positions des antennes de communication en champ proche des plateaux 320 et 330, le système centralisé de traitement effectuant alors un procédé de localisation directement à partir des messages échangés avec les étiquettes électroniques des produits.

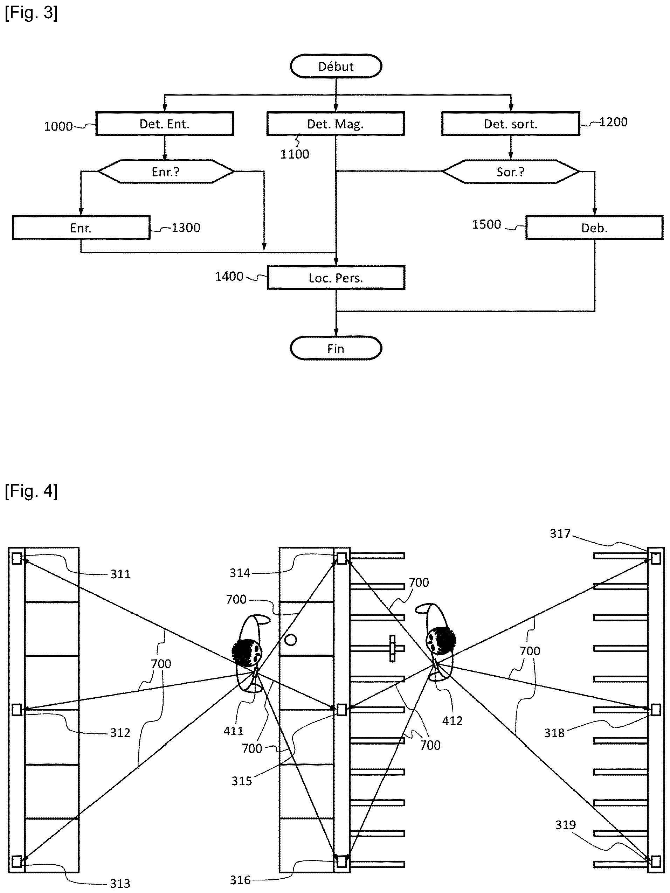

Ces première à troisième tables 301 à 303 étant définies, différents procédés sont mis en oeuvre en parallèle par le système centralisé de traitement 600 afin de les mettre à jour et de les utiliser pour réaliser une transaction commerciale automatisée. La figure 3 illustre un exemple non limitatif de procédé de détection de personne s'attachant à la gestion des personnes dans le magasin 1. Le procédé de la figure 3 réalise en parallèle des première à troisième étapes 1000, 1100 et 1200 de détection d'objet communicant 410. Dans la première étape 1000, les émetteurs-récepteurs 110 signalent au système centralisé de traitement 600 chaque message de signalisation reçu d'un objet communicant 410. Le système centralisé de traitement 600 vérifie si l'identifiant est présent dans la deuxième table 602. Si l'identifiant n'est pas présent dans la deuxième table 602, le système de traitement 600 effectue une étape 1300 d'enregistrement de nouvelle personne dans le magasin 1. Si l'identifiant est déjà présent dans la deuxième table 602, le système de traitement 600 effectue une étape 1400 de localisation de personne. Dans la deuxième étape 1100, les récepteurs 310 signalent au système centralisé de traitement 600 chaque message de signalisation reçu d'un objet communicant 410, puis l'étape 1400 de localisation de personne est réalisée. Dans la troisième étape 1200, les émetteurs-récepteurs 210 signalent au système centralisé de traitement 600 chaque message de signalisation reçu d'un objet communicant 410. Le système centralisé de traitement 600 détermine si la personne est en train de sortir du magasin, par exemple en envoyant un message à l'objet communicant 410 qui demande à la personne de confirmer qu'elle sort du magasin. Si la personne confirme sa sortie, alors le système centralisé de traitement 600 réalise l'étape 1500 de facturation. Dans une variante où la zone de sortie 200 comporte un moyen de retenue de personne, la détection de sortie peut se faire par une action sur un bouton associé au moyen de retenue, l'ouverture dudit moyen de retenue ne se faisant qu'à l'issue de la réalisation de l'étape 1500 de facturation.

L'étape 1300 d'enregistrement de nouvelle personne réalise une mise à jour de la deuxième table 602 en y ajoutant une nouvelle ligne correspondant à une nouvelle personne. La personne est identifiée par l'identifiant de l'objet communicant et un panier vide lui est associé. La localisation de la personne se fait ensuite au cours de l'étape 1400 de localisation de personne. En outre, au cours de cette étape 1300 d'enregistrement, un message est préparé par le système centralisé 600 afin d'être transmis à l'objet communicant 410 par l'intermédiaire de l'un des émetteurs-récepteurs 110 pour que l'objet communicant 410 se mette dans un mode de signalisation. Le mode de signalisation consiste à faire diffuser un message de signalisation à une fréquence déterminée, par exemple toutes les cent millisecondes, par le dispositif communicant 410. Le message de signalisation est de type « advertising », c'est-à-dire signalant à tous les dispositifs se situant à portée de communication qu'un appairage est possible. Le message de signalisation comporte un identifiant de l'objet communicant destiné à son repérage dans le magasin. Dans une variante, cette étape 1300 d'enregistrement peut comprendre le téléchargement d'une application dans l'objet communicant, un enregistrement des coordonnées bancaires de la personne, une validation d'adhésion à des conditions générales de vente. Dans une variante où la zone d'entrée 100 comporte un moyen de retenue de personne, la personne n'est autorisée à entrer dans le magasin qu'après la réalisation complète de l'étape 1300 d'enregistrement.

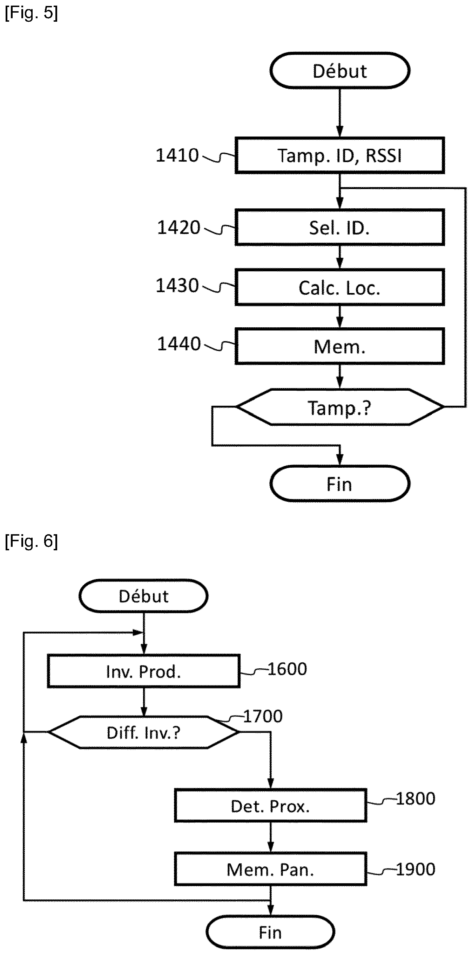

L'étape 1400 de localisation de personne consiste à récupérer tous les messages de signalisation provenant d'un même objet communicant 410 ayant été reçus sensiblement en même temps par les émetteurs-récepteurs 110 et 210 et par les récepteurs 310. Cette étape sera décrite par la suite en relation avec les figures 4 et 5.

L'étape 1500 de facturation consiste à débiter le compte bancaire de la personne 400. Lors de cette étape 1500, le contenu du panier correspondant à l'identifiant du dispositif localisé dans la zone de sortie 200 est récupéré par le système centralisé de traitement 600. Une facture est établie en réalisant une somme des prix des produits contenus dans le panier. Le système centralisé de traitement 600 peut ensuite débiter un compte bancaire associé à la personne. Dans un mode de réalisation où l'objet communicant 410 est un téléphone portable, le compte à débiter peut être indiqué par la personne 400 en renvoyant sur requête un numéro de compte bancaire ou un numéro de carte bancaire à débiter. Dans un autre mode de réalisation, le compte bancaire à débiter a été mémorisé lors de l'étape 1300 d'enregistrement. L'étape 1500 de facturation se termine par la suppression des informations relatives à la personne de la deuxième table 602.

Les étapes 1300 et 1500 d'enregistrement et de facturation peuvent être réalisées de différentes manières. Il est cependant important que lors de l'accès au magasin 1, la personne 400 associée à un dispositif portable 410 soit enregistrée par le système centralisé 600 et qu'un panier lui soit associé. Lors de la sortie du magasin 1, l'important est qu'une facturation du panier puisse être réalisée.

La figure 4 montre une partie du magasin 1 pour illustrer la réalisation de l'étape 1400 de localisation de personne détaillée sur la figure 5. Une première étape 1410 est réalisée à chaque fois qu'un message de signalisation est reçu par un émetteur-récepteur 110 ou 210 ou par un récepteur 310. Le message de signalisation reçu est stocké dans une mémoire tampon du dispositif centralisé de traitement 600. Lors du stockage du message, l'identifiant de l'objet communicant est stocké conjointement avec le niveau de puissance du signal reçu, connu sous l'acronyme RSSI (de l'anglais Received Signal Strength Indication), mesuré par l'émetteur-récepteur 110, 210 ou le récepteur 310, l'ensemble étant accompagné également de l'identification de l'émetteur-récepteur 110, 210 ou du récepteur 310 qui a reçu le message. Cette étape 1410 se déroule en permanence, indépendamment des autres étapes, de sorte que la mémoire tampon accumule tous les messages reçus dans une file de réception.

Lors d'une étape 1420, le système centralisé de traitement 600 traite en priorité le plus ancien des messages reçus de la file de réception. A cet effet, il vérifie tous les messages de la file de réception afin d'en extraire tous les messages ayant le même identifiant. En effet, comme on peut le voir sur la figure 4, un objet communicant 411 ou 412 émet un signal pouvant être reçu par tous les récepteurs 311 à 319 se trouvant à une distance suffisamment proche pour recevoir le signal. A titre d'exemple, dans le cas de Bluetooth, la puissance d'émission peut être limitée à une portée de cinq mètres. Ainsi, seuls les récepteurs 311 à 319 situés à moins de cinq mètres de l'objet communicant 411 ou 412 peuvent recevoir le signal correspondant au message de signalisation. Sur la figure 4, les flèches 700 illustrent la réception d'un message. Pour un identifiant correspondant par exemple à l'objet communicant 411, six messages ont été reçus par six récepteurs 311 à 316. Ces six messages sont sélectionnés afin de réaliser l'étape 1430 de calcul de localisation.

Dans une variante où les messages sont horodatés, l'étape 1430 peut être différée. Dans cette variante, la sélection des messages se fait sur l'identifiant de l'objet communicant et sur une fenêtre temporelle de réception dont la durée est inférieure à la durée séparant l'envoi de deux messages de signalisation.

Dans l'étape 1430 de calcul de localisation, les positions des récepteurs 311 à 316 sont récupérées dans la troisième table 603. A chacune de ces positions est associée le niveau de puissance du signal reçu (RSSI) pour le message. La localisation de l'objet communicant est ensuite calculée par triangulation, par exemple en réalisant le barycentre des positions des récepteurs 311 à 316 pondérées par le niveau de puissance du signal reçu. Un tel calcul permet de localiser l'objet communicant 411 avec une précision de l'ordre de quelques centimètres. Une fois le barycentre calculé, les messages utilisés pour ce calcul sont supprimés de la file de réception.

Une étape 1440 de mémorisation met à jour la deuxième table 602 en mémorisant le barycentre calculé comme étant la localisation la personne correspondant à l'identifiant de l'objet communicant des messages reçus. Dans une variante où la deuxième table 602 comporte un historique horodaté des positions, la date associée peut correspondre à une date égale à la moyenne des dates des messages utilisés.

Si d'autres messages sont présents dans la mémoire tampon, l'étape 1420 est réalisée à nouveau.

Une telle solution de détection de localisation des personnes 400 peut suffire dans de nombreuses configurations de magasins. Ainsi, lorsque le procédé de l'invention réalise la localisation des personnes en utilisant uniquement des récepteurs 310 radio fréquence placés à proximité du ou intégrés dans un présentoir 300, la mise en oeuvre est grandement simplifiée.

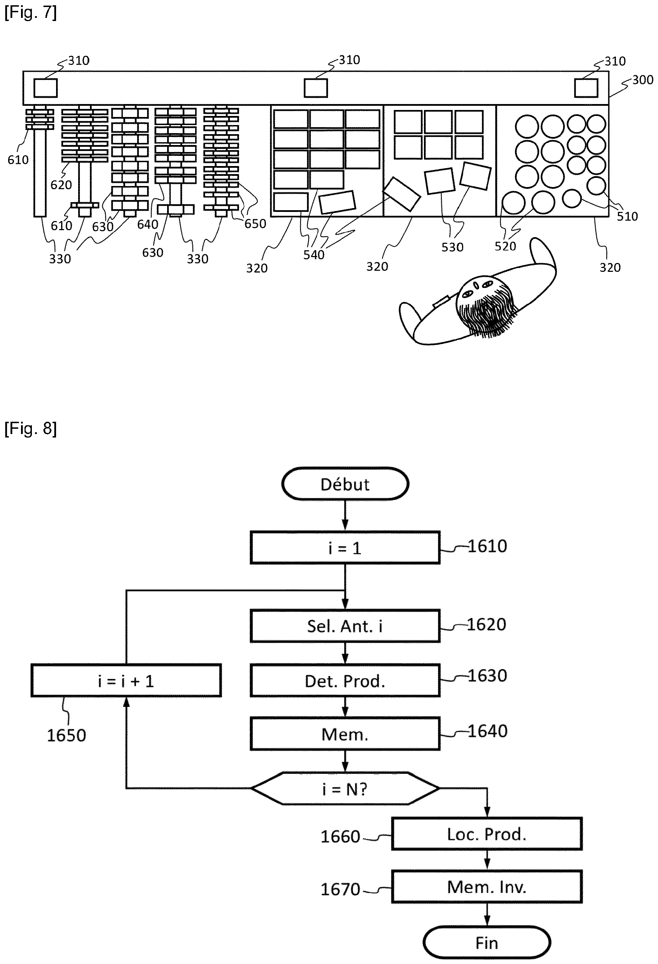

Les personnes 400 étant localisées dans le magasin, il convient à présent de détailler le procédé de manutention à l'aide de l'organigramme de la figure 6. Le procédé de manutention comporte une première étape 1600 d'inventaire au cours de laquelle la première table 601 d'inventaire est mise à jour par le système centralisé de traitement 600. Un inventaire précédemment effectué devient l'inventaire N-1 précédent et un nouvel inventaire est réalisé au cours de cette étape pour être mémorisé comme dernier inventaire N. Le détail de la réalisation de l'inventaire sera décrit par la suite en relation avec les figures 7 et 8. Dans une variante ou l'inventaire est horodaté, l'étape 1600 d'inventaire mémorise une date de fin d'inventaire.

Une fois le dernier inventaire N réalisé, celui-ci est comparé à l'inventaire N-1 précédent dans une étape 1700. Si aucune différence n'apparaît dans la comparaison des inventaires alors une nouvelle étape 1600 d'inventaire est réalisée. Si une différence apparaît dans la comparaison des inventaires, cela signifie qu'un ou plusieurs produits 500 ou 600 ont été manipulés entre les deux inventaires. Si le dernier inventaire indique qu'un produit 500 ou 600 apparaît dans le dernier inventaire N c'est qu'il a été remis sur un présentoir 300. Si un produit disparaît sur le dernier inventaire, c'est qu'il a été enlevé d'un présentoir 300. La position d'un produit 500 ou 600 remis est indiqué dans le dernier inventaire N de la première table 601 et la position d'un produit 500 ou 600 enlevé est indiqué dans l'inventaire N-1 précédent de la première table 601. Ladite position du produit 500 ou 600 remis ou enlevé est ensuite utilisée dans une étape 1800 de détection de proximité.

L'étape 1800 de détection de proximité effectue une comparaison de la position d'un produit remis ou enlevé avec les positions des personnes contenues dans la deuxième table 602. Un calcul de distance est réalisé entre la position du produit remis ou enlevé et la position de chaque personne. La distance calculée est ensuite comparée à un premier seuil de proximité. Le premier seuil de proximité est déterminé comme étant une distance maximale où il n'est pas possible qu'une autre personne puisse physiquement prendre le produit. L'objet communicant 410 étant porté par la personne 400 une telle distance maximale correspond au plus à la longueur d'un bras. Le premier seuil peut ainsi être inférieur à cinquante centimètres mais pourrait être fixé à trente centimètres. Si l'objet communicant 410 est situé à une distance inférieure au premier seuil, on peut considérer que la personne associée à l'objet communicant est la personne effectuant l'action de prise ou de remise du produit sur le présentoir.

Cependant, un téléphone portable peut être plus éloigné du produit que la longueur d'un bras. Dans ce cas il convient de fixer un deuxième seuil correspondant à une distance maximale au-delà de laquelle il n'est pas possible de prendre le produit. Néanmoins, plusieurs personnes peuvent se trouver à une distance inférieure à ce deuxième seuil et il convient donc de repérer toutes les personnes situées à une distance du produit comprise entre le premier seuil et le deuxième seuil. Une fois que toutes les personnes ont été repérées à proximité du produit, les distances sont comparées entre elles. La personne dont l'objet communicant 410 est le plus proche de l'étiquette électronique du produit manipulé est ensuite associée à l'action de prise ou de remise d'objet sur le présentoir.

Une personne 400 étant associée à la prise ou à la remise d'un produit 500 ou 600 sur le présentoir 300, une étape de mémorisation 1900 est ensuite réalisée. Lorsqu'une personne 400 a pris un produit 500 ou 600 sur un présentoir 300, l'identifiant du produit est mémorisé dans la zone de mémoire de la deuxième table 602 correspondant au panier associé à la personne. Dans un exemple simplifié, on considère qu'une personne 400 ne peut remettre un produit 500 ou 600 sur le présentoir 300 que si cette personne l'a préalablement pris. Ainsi, lorsqu'une personne 400 remet un produit 500 ou 600 sur un présentoir 300, le produit est supprimé du panier associé à la personne.

Néanmoins, il existe des cas où une personne remet un produit alors que celui-ci n'est pas dans son panier. Une personne peut prendre un produit et après discussion avec une autre personne, l'autre personne peut reposer ledit produit. Pour éviter une facturation de produit indue, il convient donc de repérer qu'une personne a remis un produit qu'elle n'a pas pris, cela peut se faire en rajoutant une information dans le panier de la personne indiquant que le produit a été remis sans avoir été pris. Une autre possibilité consiste à vérifier dans tous les autres paniers si le produit a été pris par quelqu'un d'autre et de l'ôter du panier de la personne.

Dans une variante, la détection de manipulation peut être utilisée pour repérer qui fait l'achalandage des présentoirs. Dans ce cas, les paniers peuvent indiquer les produits 500 ou 600 remis sur le présentoir 300 par la personne 400 associée au panier.

Dans une autre variante, toutes les actions de prise ou de remise de produit 500 ou 600 sont enregistrées dans le panier d'une personne 400. Ainsi, il est possible d'analyser les hésitations d'une personne par rapport à un produit ou par rapport à deux produits équivalents.

Le procédé de manutention décrit précédemment nécessite de réaliser un inventaire des produits 500 et 600 présents sur un présentoir 300. La figure 7 montre un présentoir 300 comportant plusieurs plateaux 320 et plusieurs crochets 330. Typiquement, les produits 610, 620, 630, 640 et 650 d'un même type sont normalement rangés sur un même crochet 330. Cependant, comme on peut le voir sur la figure 7, des produits 610 et 630 peuvent être placés sur le mauvais crochet 330. Les produits 510 et 520 sont placés sur un même plateau 320 et les produits 530 et 540 normalement placés sur un plateau 320 qui leur est dédié peuvent être placés sur le mauvais plateau. L'utilisation d'une étiquette électronique disposant d'un identifiant unique permet d'identifier chaque produit de manière unique. Comme indiqué précédemment, l'utilisation de plateaux 320 et de crochets 330 munis d'antennes de communication en champ proche permet d'identifier chaque produit et permet également de localiser chaque produit. Le procédé d'inventaire de la figure 8 permet de localiser de manière précise chaque produit 500 ou 600 sur les plateaux 320.

Dans un exemple de réalisation, le procédé de la figure 8 est réalisé sous le contrôle du système centralisé de traitement 600, une partie des étapes étant décentralisée au niveau des plateaux 320 et des crochets 330 et/ou au niveau du présentoir 300. Au cours d'une étape d'initialisation 1610, un indice i est initialisé à la valeur 1. Dans une étape 1620, une antenne de communication en champ proche correspondant à l'indice i est sélectionnée. Dans une étape 1630, une requête de détection d'étiquettes est envoyée par l'antenne sélectionnée et une ou plusieurs réponses d'étiquette électronique sont attendues. Les réponses reçues sont mémorisées dans une mémoire au cours d'une étape 1640 et notamment l'identification de l'étiquette ayant répondue, l'antenne ayant reçu le message, éventuellement le temps de réponse de l'étiquette. Tant que l'indice i n'est pas égal à N, N étant une valeur correspondant au nombre total d'antennes à interroger, ces trois étapes sont répétées après incrémentation de l'indice i dans une étape 1650. Lorsque l'indice i est égal à N, alors le procédé passe à une étape 1660 de localisation.

L'étape 1660 de localisation permet d'obtenir de la précision sur la localisation lorsque plusieurs antennes communiquent avec une même étiquette. Notamment sur les plateaux 320, ceux-ci comportent des réseaux d'antennes entrecroisés et plusieurs antennes peuvent détecter une même étiquette. Une moyenne sur les positions d'antenne permet d'obtenir avec une grande précision la localisation d'une étiquette par rapport à un point de référence du plateau. La position relative de l'étiquette sur le plateau doit ensuite être rapportée au niveau du magasin, à l'aide de la troisième table 603, en fonction de la position du plateau et de la direction de celui-ci dans le magasin.

Dans une variante, les étapes 1610 à 1650 sont réalisées sur le plateau 320 ainsi que la première partie de l'étape 1460 correspondant à la localisation relative sur ledit plateau 320. La deuxième partie de l'étape 1460 est réalisée après la transmission de la position relative de l'étiquette sur le plateau 320. Le système centralisé de traitement 600 calcule la position de l'étiquette électronique et du produit 500 qui lui est associé dans le magasin en réalisant une addition vectorielle de la position du plateau 320 dans le magasin et de la position relative du produit sur le plateau 320. Pour plus de détails sur la mise en oeuvre de la localisation sur un plateau comportant une pluralité d'antennes de communication en champ proche, l'homme du métier peut se reporter à la demande de brevet français numéro 19-09528 déposée le 29 août 2019.

Pour les crochets 330 disposant d'une seule antenne, un produit 600 disposé sur le crochet 330 ne peut être détecté que par la seule antenne dudit crochet. Dans ce cas, la position de l'étiquette détectée correspond simplement à la position du crochet 330 indiquée dans la troisième table 603.

Dans une variante, le crochet 330 dispose de plusieurs antennes sur sa longueur et peut localiser par lui-même une étiquette le long de celui-ci. Le crochet 330 transmet alors la position de l'étiquette sur ledit crochet et le système centralisé de traitement ajuste la position de l'étiquette en additionnant vectoriellement la position du crochet avec la position relative de l'étiquette sur le crochet selon la direction du crochet mémorisée dans la troisième table 603.

Chaque produit 500 ou 600 ayant été localisé, le système centralisé de traitement 600 met à jour l'inventaire N de la première table 601. Une telle mise à jour consiste, par exemple, à enregistrer dans ladite première table la totalité des identifiants d'étiquette électronique qui correspondent aux produits 500 et 600. La position calculée est également enregistrée dans la première table 601 afin de pouvoir être exploitée pour détecter la proximité d'une personne comme cela a été décrit précédemment.

De nombreuses variantes sont possibles. En particulier, il est rappelé que la description fait référence au protocole de communication Bluetooth et à des téléphones portables. Pour des raisons pratiques, l'utilisation d'un téléphone portable comme objet communicant permet, par le simple téléchargement d'une application, d'intégrer des fonctionnalités spécifiques permettant la mise en oeuvre de l'invention. Pour les téléphones portables disposant de Bluetooth, ce protocole a été choisi de manière préférentielle. Toutefois, il est possible d'utiliser un autre protocole de communication tel que le protocole WiFi qui est également supporté par tous les téléphones portables permettant le téléchargement d'une application. Toutefois, si WiFi est utilisé pour la localisation des téléphones portables, il est préférable de ne pas l'utiliser pour les communications entre le système centralisé de traitement et les différents éléments du magasin, ceci afin d'éviter des interférences qui pourraient nuire à la localisation. Si l'objet communicant est un dispositif de communication spécifique au magasin, l'utilisation du protocole UWB permet d'obtenir une meilleure précision sur la distance de communication que le protocole Bluetooth.

Le système centralisé de traitement 600 précédemment décrit effectue la plupart des procédés décrits. Néanmoins, il est possible de décentraliser une partie du traitement au niveau des présentoirs. En particulier, le procédé de manutention de la figure 4 peut être réalisé au niveau d'un présentoir qui dispose d'au moins deux récepteurs 310. L'inventaire se fait alors uniquement au niveau d'un présentoir 300, et l'étape de mise à jour du panier se fait par l'envoi d'un message au système centralisé de traitement 600 indiquant que la personne associée à un identifiant d'objet communicant 410 a pris ou remis un produit sur le présentoir 300.

Le procédé de manutention de l'invention a été détaillé et expliqué en référence à un procédé commercial de vente automatisé dans un magasin. Le procédé de manutention peut être utilisé pour réaliser de la gestion de stock de matériel de manière automatisée. A titre d'exemple non limitatif, les produits peuvent être des outils utilisables par un groupe de personnes et le procédé de manutention peut être utilisé pour assurer le suivi des outils afin de savoir qui a emprunté quel outil, sans qu'une quelconque transaction soit effectuée.

## Revendications

1. Procédé de détection de manutention de produits (500, 600) sur un présentoir (300) par une ou plusieurs personnes (400), lesdits produits (500, 600) étant munis d'étiquettes électroniques comportant chacune un identifiant unique, chaque personne (400) étant associée à un objet communicant (410) par radio fréquence et émettant périodiquement un signal de signalisation, ledit présentoir comprenant une pluralité d'antennes de communication en champ proche et au moins deux récepteurs (310) radio fréquence étant placés à proximité du présentoir, une unité centrale de traitement (600) étant reliée audit présentoir et auxdits récepteurs pour réaliser ledit procédé qui comporte une répétition des étapes suivantes :
- une étape d'inventaire (1600) des produits au cours de laquelle le présentoir envoie et reçoit (1630) des messages par l'intermédiaire des antennes de communication en champ proche afin d'identifier et de localiser les étiquettes électroniques de produits présents sur le présentoir,
- une étape de comparaison (1700) d'inventaires au cours de laquelle l'unité centrale de traitement détermine entre deux étapes d'inventaire successives une différence parmi les produits présents sur le présentoir, ladite étape identifiant un produit enlevé ou ajouté sur ledit présentoir et déterminant une position sur ledit présentoir où ledit produit a été enlevé ou ajouté,
- une étape de localisation (1400) de personne au cours de laquelle chacun des récepteurs radio fréquence reçoit un signal de signalisation, émis par un objet communicant par radio fréquence, mesure la puissance du signal reçu et détermine la position de l'objet communicant associé à une personne par triangulation en fonction de la position des récepteurs radio fréquence et de la mesure de puissance du signal reçu,
- une étape d'association (1800) au cours de laquelle l'unité centrale de traitement associe une personne à un produit lorsque la position de l'objet communicant associé à ladite personne est localisée à proximité de la position de l'étiquette électronique identifiée d'un produit ayant été enlevé ou ajouté sur le présentoir, ladite personne associée étant considérée ayant enlevé ou remis le produit sur le présentoir.

2. Procédé selon la revendication 1, dans lequel l'étape d'association (1800) associe la personne au produit identifié lorsque l'objet communicant est localisé à une distance de l'étiquette électronique inférieure à un premier seuil de distance.

3. Procédé selon la revendication 2, dans lequel le premier seuil de distance est inférieur à cinquante centimètres.

4. Procédé selon la revendication 2 ou 3, dans lequel, lorsqu'un ou plusieurs objets communicants sont localisés à une distance de l'étiquette électronique supérieure au premier seuil de distance et inférieure à un deuxième seuil de distance, l'étape d'association associe au produit la personne associée à l'objet communicant le plus proche de l'étiquette électronique dudit produit.

5. Procédé selon la revendication 4, dans lequel le deuxième seuil de distance est compris entre un mètre et deux mètres.

6. Procédé selon l'une des revendications précédentes, dans lequel les récepteurs radio fréquence sont des récepteurs conformes à la norme IEEE802.15.1, dans lequel le signal de signalisation est un message de signalisation indiquant un identifiant unique de l'objet communicant ayant envoyé ledit message et dans lequel la triangulation est réalisée sur les messages reçus par les au moins deux récepteurs en fonction :
- d'une mesure de puissance du signal reçu par chacun desdits récepteur pour les messages comportant le même identifiant unique, et
- de la position desdits récepteurs.

7. Présentoir de produits (300) comprenant un ou plusieurs éléments de présentation (320, 330) destinés à recevoir des produits (500, 600) munis d'étiquettes électroniques et une unité centrale de traitement (600), **caractérisé en ce que** les éléments de présentation comprennent chacun une ou plusieurs antennes de communication en champ proche, lesdites antennes de communication en champ proche étant reliées à au moins un circuit lecteur de communication en champ proche afin de pouvoir communiquer avec lesdites étiquettes électroniques et de déterminer une position de chaque produit sur ledit présentoir au cours d'une étape d'inventaire, **en ce que** l'unité centrale de traitement est agencée pour déterminer entre deux étapes d'inventaire successives une différence parmi les produits présents sur le présentoir permettant de déterminer une position sur ledit présentoir où ledit produit a été enlevé ou ajouté, **en ce que** le présentoir (300) comporte au moins deux récepteurs radio fréquence (310) espacés entre eux et destinés à recevoir un signal de signalisation provenant d'un objet communicant (410) associé à une personne (400), et **en ce que** l'unité de traitement (600) est agencée pour associer une personne à un produit lorsque la position de l'objet communicant est localisée à proximité de la position de l'étiquette électronique identifiée d'un produit ayant été enlevé ou ajouté sur le présentoir.

8. Présentoir selon la revendication 7, dans lequel l'un des éléments de présentation est un plateau (320) comportant une pluralité d'antennes de communication en champ proche et au moins un circuit lecteur de communication en champ proche.

9. Présentoir selon la revendication 7, dans lequel l'un des éléments de présentation est un crochet de présentoir (330) comportant au moins une antenne de communication en champ proche disposée à l'intérieur dudit crochet et au moins un circuit lecteur placé dans une base de fixation dudit crochet.

10. Magasin (1) comportant au moins un présentoir (300) selon l'une des revendications 7 à 9, au moins un premier émetteur-récepteur (110) radio fréquence placé dans une zone d'entrée (100) dudit magasin, au moins un deuxième émetteur-récepteur (210) radio fréquence placé dans une zone de sortie (200) dudit magasin, et un système centralisé de traitement (600) configuré pour :
- détecter (1000) un objet communicant (410) dans la zone d'entrée à l'aide du au moins un premier émetteur-récepteur,
- associer (1300) l'objet communicant à une personne et à un panier de ladite personne,
- détecter une manipulation d'un produit (500, 600) sur le présentoir (300) selon le procédé de l'une des revendication 1 à 6 et enregistrer (1900) le produit enlevé ou remis comme étant respectivement ajouté au panier ou enlevé du panier, suivant que le produit (500, 600) ait été respectivement enlevé du présentoir ou remis sur le présentoir,
- facturer, par débit d'un compte bancaire associé à la personne, les produits enregistrés dans le panier lorsque la personne est détectée dans la zone de sortie par le deuxième émetteur-récepteur.

## Patentansprüche

1. Verfahren zum Erkennen der Handhabung von Produkten (500, 600) auf einem Schaugestell (300) durch eine oder mehrere Personen (400), wobei die genannten Produkte (500, 600) mit elektronischen Etiketten jeweils mit einer eindeutigen Kennung versehen sind, wobei jede Person (400) mit einem Objekt (410) assoziiert ist, das über Radiofrequenz kommuniziert und periodisch ein Signalisierungssignal aussendet, wobei das genannte Schaugestell mehrere Nahfeldkommunikationsantennen umfasst und mindestens zwei Radiofrequenzempfänger (310) in der Nähe des Schaugestells platziert sind, wobei eine Zentraleinheit (600) mit dem genannten Schaugestell und den genannten Empfängern verbunden ist, um das genannte Verfahren durchzuführen, das eine Wiederholung der folgenden Schritte beinhaltet:
- einen Produktinventarisierungsschritt (1600), bei dem das Schaugestell über die Nahfeldkommunikationsantennen Nachrichten sendet und empfängt (1630), um die elektronischen Etiketten von auf dem Schaugestell befindlichen Produkten zu identifizieren und zu lokalisieren,
- einen Inventarvergleichsschritt (1700), bei dem die Zentraleinheit zwischen zwei aufeinanderfolgenden Inventarisierungsschritten eine Differenz unter den auf dem Schaugestell befindlichen Produkten bestimmt, wobei der genannte Schritt ein vom Schaugestell genommenes oder dorthin gelegtes Produkt identifiziert und eine Position auf dem genannten Schaugestell bestimmt, an der das genannte Produkt genommen oder gelegt wurde,
- einen Personenlokalisierungsschritt (1400), bei dem jeder der Radiofrequenzempfänger ein von einem über Radiofrequenz kommunizierenden Objekt ausgesendetes Signalisierungssignal empfängt, die Stärke des empfangenen Signals misst und die Position des mit einer Person assoziierten kommunizierenden Objekts durch Triangulation in Abhängigkeit von der Position der Radiofrequenzempfänger und dem Stärkemesswert des empfangenen Signals bestimmt,
- einen Assoziierungsschritt (1800), bei dem die Zentraleinheit eine Person mit einem Produkt assoziiert, wenn die Position des mit der genannten Person assoziierten kommunizierenden Objekts in der Nähe der Position des identifizierten elektronischen Etiketts eines vom Schaugestell genommenen oder dorthin gelegten Produkts lokalisiert ist, wobei angenommen wird, dass die genannte assoziierte Person das Produkt vom Schaugestell genommen oder dorthin zurückgelegt hat.

2. Verfahren nach Anspruch 1, wobei der Assoziierungsschritt (1800) die Person mit dem identifizierten Produkt assoziiert, wenn das kommunizierende Objekt in einer Entfernung von dem elektronischen Etikett lokalisiert ist, die kleiner als ein erster Entfernungsschwellenwert ist.

3. Verfahren nach Anspruch 2, wobei der erste Entfernungsschwellenwert kleiner als fünfzig Zentimeter ist.

4. Verfahren nach Anspruch 2 oder 3, wobei, wenn ein oder mehrere kommunizierende Objekte in einer Entfernung vom elektronischen Etikett lokalisiert sind, die größer als der erste Entfernungsschwellenwert und kleiner als ein zweiter Entfernungsschwellenwert ist, der Assoziierungsschritt mit dem Produkt die Person assoziiert, die mit dem kommunizierenden Objekt assoziiert ist, das dem elektronischen Etikett des genannten Produkts am nächsten liegt.

5. Verfahren nach Anspruch 4, wobei der zweite Entfernungsschwellenwert zwischen einem Meter und zwei Metern liegt.

6. Verfahren nach einem der vorherigen Ansprüche, wobei die Radiofrequenzempfänger Empfänger gemäß dem Standard IEEE802.15.1 sind, wobei das Signalisierungssignal eine Signalisierungsnachricht ist, die eine eindeutige Kennung des kommunizierenden Objekts angibt, das die genannte Nachricht ausgesendet hat, und wobei die Triangulation an den von den mindestens zwei Empfängern empfangenen Nachrichten durchgeführt wird in Abhängigkeit von:
- einem Stärkemesswert des von jedem der genannten Empfänger empfangenen Signals für die Nachrichten mit derselben eindeutigen Kennung, und
- der Position der genannten Empfänger.

7. Produktschaugestell (300) mit einem oder mehreren Display-Elementen (320, 330), bestimmt zur Aufnahme von Produkten (500, 600), die mit elektronischen Etiketten und einer Zentraleinheit (600) versehen sind, **dadurch gekennzeichnet, dass** die Display-Elemente jeweils eine oder mehrere Nahfeldkommunikationsantennen umfassen, wobei die genannten Nahfeldkommunikationsantennen mit mindestens einer Nahfeldkommunikationsleseschaltung verbunden sind, um mit den genannten elektronischen Etiketten kommunizieren und eine Position jedes Produkts auf dem genannten Schaugestell während eines Inventarisierungsschritts bestimmen zu können, dadurch, dass die Zentraleinheit zum Bestimmen, zwischen zwei aufeinanderfolgenden Inventarisierungsschritten, einer Differenz unter den auf dem Schaugestell befindlichen Produkten ausgelegt ist, so dass eine Position auf dem genannten Schaugestell bestimmt werden kann, an der das genannte Produkt genommen oder gelegt wurde, dadurch, dass das Schaugestell (300) mindestens zwei voneinander beabstandete Radiofrequenzempfänger (310) aufweist, die zum Empfangen eines Signalisierungssignals bestimmt sind, das von einem mit einer Person (400) assoziierten kommunizierenden Objekt (410) stammt, und dadurch, dass die Verarbeitungseinheit (600) zum Assoziieren einer Person mit einem Produkt ausgelegt ist, wenn die Position des kommunizierenden Objekts in der Nähe der Position des identifizierten elektronischen Etiketts eines Produkts lokalisiert ist, das vom Schaugestell genommen oder dorthin gelegt wurde.

8. Schaugestell nach Anspruch 7, wobei eines der Display-Elemente ein Tablett (320) ist, das mehrere Nahfeldkommunikationsantennen und mindestens eine Nahfeldkommunikationsleseschaltung umfasst.

9. Schaugestell nach Anspruch 7, wobei eines der Display-Elemente ein Display-Haken (330) ist, der mindestens eine im Inneren des genannten Hakens angeordnete Nahfeldkommunikationsantenne und mindestens eine in einer Befestigungsbasis des genannten Hakens platzierte Leseschaltung umfasst.

10. Geschäft (1) mit mindestens einem Schaugestell (300) nach einem der Ansprüche 7 bis 9, mindestens einem ersten Radiofrequenz-Sende-Empfangsgerät (110), das in einer Eingangszone (100) des genannten Geschäfts platziert ist, mindestens einem zweiten Radiofrequenz-Sende-Empfangsgerät (210), das in einer Ausgangszone (200) des genannten Geschäfts platziert ist, und einem zentralen Verarbeitungssystem (600), konfiguriert zum:
- Erkennen (1000) eines kommunizierenden Objekts (410) in der Eingangszone mithilfe des mindestens einen ersten Sende-Empfangsgeräts,
- Assoziieren (1300) des kommunizierenden Objekts mit einer Person und einem Einkaufskorb der genannten Person,
- Erkennen einer Manipulation eines Produkts (500, 600) auf dem Schaugestell (300) gemäß dem Verfahren nach einem der Ansprüche 1 bis 6 und Registrieren (1900) des genommenen oder zurückgelegten Produkts als dem Einkaufskorb hinzugefügt bzw. vom Einkaufskorb genommen, je nachdem, ob das Produkt (500, 600) vom Schaugestell genommen bzw. in das Schaugestell zurückgelegt wurde,
- Berechnen, durch Belasten eines mit der Person assoziierten Bankkontos, der im Einkaufskorb registrierten Produkte, wenn die Person in der Ausgangszone vom zweiten Sende-Empfangsgerät erkannt wird.

## Claims

1. Method for detecting the handling of products (500, 600) on a display stand (300) by one or more persons (400), said products (500, 600) being provided with electronic tags each containing a unique identifier, each person (400) being associated with an object (410) communicating by radio frequency and periodically transmitting a signalling signal, said display stand comprising a plurality of near-field communication antennas and at least two radio frequency receivers (310) being placed close to the display stand, a central processing unit (600) being connected to said display stand and to said receivers in order to carry out said method which includes repeating the following steps:
- a product inventory step (1600) during which the display stand sends and receives (1630) messages via the near-field communication antennas so as to identify and locate the electronic tags of products present on the display stand,
- an inventory comparison step (1700) during which the central processing unit determines, between two successive inventory steps, a difference among the products present on the display stand, said step identifying a product removed from or added to said display stand and determining a position on said display stand where said product has been removed or added,
- a person locating step (1400) during which each of the radio frequency receivers receives a signalling signal transmitted by an object communicating by radio frequency, measures the strength of the signal received and determines the position of the communicating object associated with a person by triangulation depending on the position of the radio frequency receivers and on the strength measurement of the signal received,
- an association step (1800) during which the central processing unit associates a person with a product when the position of the communicating object associated with said person is located close to the position of the identified electronic tag of a product which has been removed from or added to the display stand, said associated person being considered to have removed the product from or put it back on the display stand.

2. Method according to claim 1, wherein the association step (1800) associates the person with the identified product when the communicating object is located at a distance from the electronic tag which is less than a first distance threshold.

3. Method according to claim 2, wherein the first distance threshold is less than fifty centimetres.

4. Method according to claim 2 or 3, wherein, when one or more communicating objects are located at a distance from the electronic tag which is greater than the first distance threshold and less than a second distance threshold, the association step associates with the product the person associated with the communicating object closest to the electronic tag of said product.

5. Method according to claim 4, wherein the second distance threshold lies between one metre and two metres.

6. Method according to one of the preceding claims, wherein the radio frequency receivers are receivers in accordance with standard IEEE802.15.1, wherein the signalling signal is a signalling message indicating a unique identifier of the communicating object which sent said message and wherein the triangulation is performed on the messages received by the at least two receivers depending on:
- a strength measurement of the signal received by each of said receivers for the messages containing the same unique identifier, and
- the position of said receivers.

7. Product display stand (300) comprising one or more display elements (320, 330) intended to receive products (500, 600) provided with electronic tags, and a central processing unit (600), **characterized in that** the display elements each comprise one or more near-field communication antennas, said near-field communication antennas being connected to at least one near-field communication reader circuit so as to be able to communicate with said electronic tags and to determine a position of each product on said display stand during an inventory step, **in that** the central processing unit is arranged in order to determine, between two successive inventory steps, a difference among the products present on the display stand which makes it possible to determine a position on said display stand where said product has been removed or added, **in that** the display stand (300) contains at least two radio frequency receivers (310) spaced apart from each other and intended to receive a signalling signal originating from a communicating object (410) associated with a person (400), and **in that** the processing unit (600) is arranged in order to associate a person with a product when the position of the communicating object is located close to the position of the identified electronic tag of a product which has been removed from or added to the display stand.

8. Display stand according to claim 7, wherein one of the display elements is a tray (320) containing a plurality of near-field communication antennas and at least one near-field communication reader circuit.

9. Display stand according to claim 7, wherein one of the display elements is a display stand hook (330) containing at least one near-field communication antenna arranged inside said hook and at least one reader circuit placed in a mounting base of said hook.

10. Shop (1) containing at least one display stand (300) according to one of claims 7 to 9, at least one first radio frequency transmitter-receiver (110) placed in an entrance area (100) of said shop, at least one second radio frequency transmitter-receiver (210) placed in an exit area (200) of said shop, and a centralized processing system (600) configured to:
- detect (1000) a communicating object (410) in the entrance area with the aid of the at least one first transmitter-receiver,
- associate (1300) the communicating object with a person and with a shopping basket of said person,
- detect a manipulation of a product (500, 600) on the display stand (300) according to the method of one of claims 1 to 6 and register (1900) the product removed or put back as being added to the shopping basket or removed from the shopping basket respectively, according to whether the product (500, 600) has been removed from the display stand or put back on the display stand respectively,
- charge for, by debiting from a bank account associated with the person, the products registered in the shopping basket when the person is detected in the exit area by the second transmitter-receiver.
